(19) Europäisches Patentamt
European Patent Office
Office européen des brevets

(11) Publication number: 0 384 451 A2

(12) **EUROPEAN PATENT APPLICATION**

(21) Application number: 90103427.2

(22) Date of filing: 22.02.90

(51) Int. Cl.[5] **C08J 5/18, C08K 5/19, C08L 23/02, B32B 27/32, //(C08L23/02,23:02)**

(30) Priority: 22.02.89 US 313771

(43) Date of publication of application: 29.08.90 Bulletin 90/35

(84) Designated Contracting States: AT BE CH DE DK ES FR GB GR IT LI LU NL SE

(71) Applicant: **W.R. Grace & Co.-Conn.**
**1114 Avenue of the Americas**
**New York New York 10036(US)**

(72) Inventor: **Havens, Marvin Russel,**
**206 Hackney Road,**
**Greer, South Carolina 29650(US)**
Inventor: **Fowler, Stephen Leroy,**
**3551 Moore Duncan Hwy.,**
**Moore, South Carolina 29369(US)**

(74) Representative: **Abitz, Walter, Dr.-Ing. et al**
**Abitz, Morf, Gritschneder, Freiherr von Wittgenstein Postfach 86 01 09**
**D-8000 München 86(DE)**

(54) **Radio frequency sealable permanent antistatic acid copolymer/quaternary amine polymeric films.**

(57) A radio frequency polyolefinic film containing an acid copolymer quaternary amine mixture is disclosed. The film is permanently antistatic. The acid copolymer is a copolymer of (i) a major amount by mol % of an alpha-olefin of the formula $RCH=CH_2$ wherein R is H or $C_1$ to $C_{20}$ alkyl, and (ii) a minor amount by mol % of an alpha,beta-ethylenically unsaturated carboxylic acid. The quaternary amine is of the formula $[(R^1)(R^2)(R^3)(R^4)N]^+$ $[X]^-$ wherein R' is selected from H, aryl, or $C_1$ to $C_{50}$ alkyl optionally having one or more non-contiguous C=O or NHC=O or -S- or -O- in the carbon chain, or the same as $R^2$; each of $R^2$, $R^3$, and $R^4$ is the same or different and selected from K, from $C_1$ to $C_{18}$ alkyl optionally substituted with one or more OH, or from $-(R^5-O)_a-H$ where a is an integer from 1 to 10 and $R^5$ is ethylene or propylene; and X is an anion selected from chloride, bromide, iodide, fluoride, nitrate, fluoborate, phosphate, $C_1$ to $C_8$ alkyl phosphate, sulfate, $C_1$ to $C_8$ alkyl sulfate, formate, $C_1$ to $C_{20}$ alkyl or $C_6$ to $C_{24}$ alkaryl or aryl sulfonate, acetate, citrate, trifluoroacetate, propionate, tartrate or carbonate.

EP 0 384 451 A2

# RADIO FREQUENCY SEALABLE PERMANENT ANTISTATIC ACID COPOLYMER/QUATERNARY AMINE POLYMERIC FILMS

## FIELD OF THE INVENTION

Although it is desired to have polyolefinic films that are radio frequency (Rf) sealable at a wide range of hertz. it is known that polyolefins are not Rf sealable, but polyvinylidene chloride (PVC) films are and nylon films are. PVC. however. has the drawback that it gives off dangerous chlorine when Rf sealed and nylon has the drawback in that it is expensive.

This invention relates to new polyolefinic films containing acid copolymer quaternary amine. The films are Rf sealable. Moreover. the films are also antistatic. So besides general packaging uses where antistatic protection is not needed, the films particularly are useful, for instance. in making document holders for documents used in the vicinity of electronic devices that are sensitive to and need to be protected from static electricity. The film has permanent, non-bleeding antistatic characteristics. By "permanent, non-bleeding" antistatic characteristics is meant the film exhibits a static decay time (hereinafter abbreviated as SDT) under about 3000 milliseconds (hereinafter abbreviated as ms) when the static decay test using 5000 volts direct current (hereinafter abbreviated as Vdc) is conducted as per Federal Test Method 101c, Method 4046.1, after a 24-hour water shower, i.e. the antistat property is not washed out by the shower. In the preferred embodiments, the film will also still have this SDT of about 3000 ms or less even after 12 days in a hot (approximately 70 °C) oven.

We have surprisingly found that the films of the invention can be Rf sealed and so it is not necessary to seal them thermally. Rf sealing comprises the application of a high frequency electromagnetic field between a pair of metallic jaws that clamp the layers that are to be welded. Parameters that influence the process performances are frequency, sealing time and pressure on the jaws. In the invention preferred frequencies are 20 to 70 MHz: preferred sealing times are 0.5 to 5 seconds; preferred pressures are 0.5 to 10 bars (7.25 psi to 145 psi). Conventional equipment runs at 20 to 30 MHz. Accordingly, the film of the invention is not only antistatic but also Rf sealable.

## BACKGROUND OF THE INVENTION

Thermoplastic polymers are typically excellent insulators (i.e. dielectrics) and thus are unsatisfactory for uses requiring a nature that will dissipate charges. It is well known that static charge can be reduced by increasing the moisture content of the atmosphere, and thus the approach in the past has been to use an antistatic agent which will modify the inherently dielectric polymer to impart hydrophilic properties to it by providing functional groups that attract moisture to it, and which work by migrating to the polymer surface. This migration is colloquially referred to in the art of antistatic polymer technology as a "blooming" or "bleeding" effect. The atmospheric moisture is attracted causing decay or dissipation of static charges, i.e. such films depend on ambient humidity which is typically around 40 or 50% AH. Accordingly a high rate of blooming is required. Such films can overbloom and lose their antistatic character if subjected to a 24 hour water shower or a prolonged heat exposure.

Of interest is US Patent 4,599,276, Martini assignor to W.R. Grace which shows films having surface layers of ethylene-propylene copolymer, which films are Rf sealable only at 70 MHz.

Many patents show quaternary amines (also referred to as quaternary ammonium compounds or salts) as antistatic agents. Examples are US Patent 3,324,091 to Sauides, US Patents 3,445,440, and 3,517,045 both to Susi and Arthen, US Patent 3,894,077 to Horikawa et al, US Patent 4,104,175 to Martinsson et al, US Patent 4,268,583 and T961009 both to Hendy, and US Patent 4,605,684 to Pcolinsky.

Also of interest is Japanese Published Patent Application Kokai No. 59-47243, Ito et al, assignors to Mitsui (published March 16, 1984) which shows an electrically conductive resin composition comprising ethylene/alpha,beta unsaturated carboxylic acid copolymer and a tertiary alkanolamine.

More particularly, US Patent 3,933,779 issued January 20, 1976 to Baron et al assignors to Fine Organics discloses an antistatic polymer blend comprising a synthetic polymer and an antistatically effective amount of a compound of the formula: diethoxy methyl alkyl ammonium toluene sulfate, wherein alkyl is of 4 to 18 carbon atoms unsubstituted or substituted by halo or aryl.

At pages 18 and 19 of published European Patent Application 0219315 Mott assignor to Dow, date of

publication April 22, 1987, is a passage stating that their preferred antistatic material is an acrylate monomer-oligomer mixture containing an alkylether triethyl ammonium sulfate available from Metallized Products under the trade-name Staticure, which material is curable by exposure to an electron beam to a permanent, non-bleeding coating which is not dependent on humidity for its antistatic effect. The passage in EP 0219315 goes on to say that further details concerning this material appear in British Patent Application No. 2,156,362 published October 9, 1985.

British Patent Application No. 2,156,362 is the counterpart of US Patent 4,623,594 issued November 18, 1986 to Keough assignor to Metallized Products. US Patent 4,623,594 claims:

1. An antistatic laminate, both sides of which have antistatic characteristics, comprising:

(A) a substrate sheet;

(B) a continuous coating on one side of said substrate sheet, said continuous coating comprising the electron radiation cured product of:

(1) an electron beam curable prepolymer; and

(2) an effective amount of a saturated quaternary ammonium compound antistatic agent soluble in said prepolymer the product being a reaction product of the prepolymer and the ammonium compound converted into a substantially solid product.

2. The antistatic laminate of claim 1 wherein said quaternary ammonium compound is a trialkylalkyletherammonium salt. [Emphasis supplied.]

The laboratory examples of US Patent 4,623,594 show that the particular trialkyl alkylether ammonium salt employed was Emerstat 6660 from Emery Industries. Page 52 of a catalog entitled "Miscellaneous Surfactants" describes Emerstat 6660 as a 100% active liquid cationic compound which offers high performance antistatic capacity, but page 52 does not give any generic chemical formula. It is believed that Emerstat 6660 is a diethoxylated alkyl ammonium salt of the formula $(A)(A')N[(CH_2CH_2O)_nH]_2^+ A'OSO_3^-$ which is further described below.

Of general interest is US Patent 4,678,836 (July 7, 1987) McKinney et al assignors to Dow Chemical. It shows blends of linear low density polyethylene (LLDPE) and ethylene-acrylic acid (EAA).

Permanent antistatic films containing acid copolymer quaternary amine, some of which are useful in the present invention for Rf sealable film are disclosed in applicants' copending USSN 249,488 (EPA 89 100 522.5) commonly assigned to W.R.Grace & Co.-Conn., the disclosure of which is incorporated herein by reference. Also, pertinent portions thereof are repeated here for clarity.

## SUMMARY OF THE INVENTION

The present acid copolymer/quaternary amine mixture may be made into a single ply and/or multiple ply film, and additional advantageous features such as tougher films, further described below, may be obtained when such films are irradiated by electron beam. The films of the invention will dissipate an applied charge of ±5000 volts direct current (Vdc) in about 3000 milliseconds (ms) or less, more preferably about 2000 ms or less. The films of the invention still will exhibit this static decay time behavior after a 24 hour water shower. In the preferred embodiments, the films also will still exhibit this static decay time behavior after 12 days in a hot (approximately 70° C) oven. This is true even if the films were not previously irradiated by electron beam. Thus, the antistatic effect is permanent and non-bleeding, without any requirement for electron beam "curing". Accordingly, very satisfactory films may be obtained absent any electron beam irradiation. Thus the irradiation does not have to be employed but may be employed if desired to achieve enhanced toughness and the like as further described below. The new, acid copolymer/quaternary amine mixture may be molded or extruded together with polyolefinic-type polymers known for their strength such as ethylene vinyl acetate (EVA), polypropylene (PP) or linear low density polyethylene (LLDPE). As the resultant film is Rf sealable it is useful for making packaging, such as a bag or over-wrap, for enclosing items in general and in particular for enclosing electronic devices that are sensitive to static electricity. If desired, the packaging could be a heat-shrinkable or vacuum skin packaging. More particularly, the film is useful in making Rf sealed antistatic plastic document holders. Documents, such as assembly instructions, often need to be placed near static sensitive devices. The documents are inserted in plastic holders for physical protection of the documents. Yet touching an ordinary plastic holder, which is dielectric, can cause static electricity harmful to the device. The problem is obviated by employing an antistatic polymeric document holder. The antistatic holder covers the document and when touched, harmful static discharge is not given off. Also such a film is useful to make a package for enclosing devices in a medical operating room where explosive oxygen and/or ether are present and thus protection from

static electricity must be provided. Also such films may be advantageously employed for any use requiring a plastic with a decreased tendency to accumulate dust.

Therefore, it is an object of the present invention to provide a novel, acid copolymer quaternary amine mixture useful in making a Rf sealable polyolefinic film useful in packaging. As the film is antistatic, more particularly an advantage is that it is useful for enclosing static sensitive devices or for enclosing an item that is stored near a static sensitive device to prevent that item from giving harmful static discharge to the device. It is also an object that the films are antistatic at conditions that are substantially independent of ambient humidity, i.e. the films are still able to decay an applied ±5000 VDC in less than about 3000 ms, more preferably less than about 2000 ms, when conditioned at less than about 15% relative humidity. They do not require the typical ambient RH of 40 to 50% AH in order to work as an antistatic film.

A feature of the films is that they also have excellent see-through properties which is advantageous for reading code numbers preprinted on a product wrapped with the film.

The present invention provides a method for making a radio frequency sealable film comprising

(1) mixing with heat (A) a polymer containing carboxylic acid moieties and (B) an antistatically effective amount of a quaternary amine wherein:

(A) the polymer containing carboxylic acid moieties is a copolymer of (i) a major amount by mol % of an alpha-olefin of the formula $RCH=CH_2$ wherein R is H or $C_1$ to $C_{20}$ alkyl, and (ii) a minor amount by mol of an alpha,beta-ethylenically unsaturated carboxylic acid,

and

(B) the quaternary amine is of the formula $[(R^1)(R^2)(R^3)(R^4)N]^+$ $[X]^-$

$R^1$ is selected from H, aryl, or $C_1$ to $C_{50}$ alkyl optionally having one or more non-contiguous C=O or NHC=O or -S- or -O- in the carbon chain, or the same as $R^2$;

each of $R^2$, $R^3$, and $R^4$ is the same or different and selected from H, from $C_1$ to $C_{18}$ alkyl optionally substituted with one or more OH, or from $-(R^5-O)_a-H$ where a is an integer from 1 to 10 and $R^5$ is ethylene or propylene;

and

X is an anion selected from chloride, bromide, iodide, fluoride, nitrate, fluoborate, phosphate, sulfate, $C_1$ to $C_8$ alkyl sulfate, formate, $C_1$ to $C_{20}$ alkyl or $C_6$ to $C_{24}$ alkaryl or aryl sulfonate, acetate, citrate, trifluoroacetate, propionate, tartrate or carbonate;

(2) mixing the acid copolymer quaternary amine mixture with polyolefin;

and

(3) forming the resultant into a film.

Preferably, the $C_1$ to $C_8$ alkyl phosphate is methyl phosphate or ethyl phosphate, the $C_1$ to $C_8$ alkyl sulfate is methyl sulfate or ethyl sulfate, and the $C_1$ to $C_{20}$ alkyl or $C_6$ to $C_{24}$ alkaryl or aryl sulfonate is methanesulfonate, butanesulfonate, benzenesulfonate, or $C_1$ to $C_{18}$ alkyl benzenesulfonate.

The present invention also provides a radio frequency sealable film comprising (A) a polymer containing carboxylic acid moieties and (B) an antistatically effective amount of a quaternary amine and (C) polyolefin wherein:

(A) the polymer containing carboxylic acid moieties is a copolymer of (i) a major amount by mol % of an alpha-olefin of the formula $RCH=CH_2$ wherein R is H or $C_1$ to $C_{20}$ alkyl, and (ii) a minor amount by mol % of an alpha,beta-ethylenically unsaturated carboxylic acid,

and

(B) the quaternary amine is of the formula

$[(R^1)(R^2)(R^3)(R^4)N]^+$ $[X]^-$

wherein

$R^1$ is selected from H, aryl, or $C_1$ to $C_{50}$ alkyl optionally having one or more non-contiguous C=O or NHC=O or -S- or -O- in the carbon chain, or the same as $R^2$;

each of $R^2$, $R^3$, and $R^4$ is the same or different and selected from H, from $C_1$ to $C_{18}$ alkyl optionally substituted with one or more OH, or from $-(R^5-O)_a-H$ where a is an integer from 1 to 10 and $R^5$ is ethylene or propylene;

and

X is an anion selected from chloride, bromide, iodide, fluoride, nitrate, fluoborate, phosphate, $C_1$ to $C_8$ alkyl phosphate, sulfate, $C_1$ to $C_8$ alkyl sulfate, formate, $C_1$ to $C_{20}$ alkyl or $C_6$ to $C_{24}$ alkaryl or aryl sulfonate, acetate, citrate, trifluoroacetate, propionate, tartrate, or carbonate.

The present invention also provides a permanently antistatic Rf sealable film comprising (A) ethylene-acrylic acid or ethylene-methacrylic acid and (B) a quaternary amine of the formula $[R^1R^2R^3R^4N]^+$ $[X]^-$ where $R^1$ is a $C_4$ to $C_{30}$ straight or branched alkyl optionally including one or more ether linkages, each of $R^2$ and $R^3$ and $R^4$ is the same or different and selected from methyl or ethyl or $-(R^5-O)a-H$ where a is an

integer from 1 to 10. and X is chloride, alkyl sulfonate, methyl sulfate, or ethyl sulfate, and (C) polyolefin.

The present invention also provides a film comprising a 5-layer, permanently antistatic Rf sealable film having the layers in direct surface-to-surface contact with each other in the following order:

(1) a first layer, said layer being an outside layer comprising about 50% or more by weight of ethylene vinyl acetate copolymer and about 10% or less by weight of antiblock,

(2) a second layer, said layer being an interior layer comprising about 65% or more by weight ethylene vinyl acetate copolymer, and about 35% or less by weight of a mixture of (A) a polymer containing carboxylic acid moieties and (B) an antistatically effective amount of a quaternary amine wherein:

(A) the polymer containing carboxylic acid moieties is

a copolymer of (i) a major amount by mol % of an alpha-olefin of the formula $RCH=CH_2$ wherein R is H or $C_1$ to $C_{20}$ alkyl, and (ii) a minor amount by mol % of an alpha,beta-ethylenically unsaturated carboxylic acid.

and

(B) the quaternary amine is of the formula $[(R^1)(R^2)(R^3)(R^4)N]^+ [X]^-$

wherein

$R^1$ is selected from H, aryl, or $C_1$ to $C_{50}$ alkyl optionally having one or more non-contiguous C=O or NHC=O or -S- or -O- in the carbon chain, or the same as $R^2$;

each of $R^2$, $R^3$, and $R^4$ is the same or different and selected from H, from $C_1$ to $C_{18}$ alkyl optionally substituted with one or more OH, or from $-(R^5-O)_a-H$ where a is an integer from 1 to 10 and $R^5$ is ethylene or propylene; and

X is an anion selected from chloride, bromide, iodide, fluoride, nitrate, fluoborate, phosphate, $C_1$ to $C_8$ alkyl phosphate, sulfate, $C_1$ to $C_8$ alkyl sulfate, formate, $C_1$ to $C_{20}$ alkyl or $C_6$ to $C_{24}$ alkaryl or aryl sulfonate, acetate, citrate, trifluoroacetate, propionate, tartrate, or carbonate,

(3) a third layer, said layer being a core layer comprising about 65% or more by weight of a polyolefin selected from linear low density polyethylene copolymer, ethylene vinyl acetate copolymer or mixtures thereof, and about 35% or less by weight of a mixture of (A) a polymer containing carboxylic acid moieties and (B) an antistatically effective amount of a quaternary amine wherein:

(A) the polymer containing carboxylic acid moieties is

a copolymer of (i) a major amount by mol % of an alpha-olefin of the formula $RCH=CH_2$ wherein R is H or $C_1$ to $C_{20}$ alkyl, and (ii) a minor amount by mol of an alpha,beta-ethylenically unsaturated carboxylic acid,

and

(B) the quaternary amine is of the formula

$[(R^1)(R^2)(R^3)(R^4)N]^+ [X]^-$

wherein

$R^1$ is selected from H, aryl, or $C_1$ to $C_{50}$ alkyl optionally having one or more non-contiguous C=O or NHC=O or -S- or -O- in the carbon chain, or the same as $R^2$;

each of $R^2$, $R^3$, and $R^4$ is the same or different and selected from H, from $C_1$ to $C_{18}$ alkyl optionally substituted with one or more OH, or from $-(R^5-O)_a-H$ where a is an integer from 1 to 10 and $R^5$ is ethylene or propylene;

and

X is an anion selected from chloride, bromide, fluoride, iodide, nitrate, fluoborate, phosphate, $C_1$ to $C_8$ alkyl phosphate, sulfate, $C_1$ to $C_8$ alkyl sulfate, formate, $C_1$ to $C_{20}$ alkyl or $C_6$ to $C_{24}$ alkaryl or aryl sulfonate, acetate, citrate, trifluoroacetate, propionate, tartrate, or carbonate,

(4) a fourth layer, comprising an interior layer the same as layer (2), and

(5) a fifth layer, comprising an outside layer the same as layer (1).

## DETAILED DESCRIPTION OF THE INVENTION

The acid copolymer is a polymer containing carboxylic acid moieties. By "polymers containing carboxylic acid moieties" as that term is used herein it is intended to mean copolymers of (i) a major amount by mol % of an alpha-olefin having the formula $RCH=CH_2$ wherein A is H or $C_1$ to $C_{20}$ alkyl and (ii) a minor amount by mol % of an alpha,beta-ethylenically unsaturated carboxylic acid. Preferably when R is alkyl, it is $C_1$ to $C_8$ alkyl. Preferably, the alpha,beta-ethylenically unsaturated carboxylic acid is present in an amount by mol % of about 40% or less, more preferably about 30% or less, most preferably about 20% or less. Also, by the term "polymers containing carboxylic acid moieties", it is intended to mean that the copolymer of an alpha-olefin having the formula $RHC=CH_2$ wherein R is H or $C_1$ to $C_{20}$ alkyl and an

alpha,beta-ethylenically unsaturated carboxylic acid may be wholly or partially neutralized with a suitable cation such as zinc cation or sodium cation. Thus, the polymer containing carboxylic acid moieties may be an ionomer.

The acid copolymer need not necessarily comprise a two component polymer. Thus, although the olefin content of the acid copolymer preferably is at least 50 mol %, more than one olefin may be employed. Also, other copolymerizable monoethylenically unsaturated monomers may be employed in combination with the olefin and the carboxylic acid comonomer. It is intended also to include terpolymers. Accordingly, acid copolymers or terpolymers suitable for use in the present invention include, but are not limited to, ethylene acrylic acid copolymers, ethylene methacrylic acid copolymers, ethylene/itaconic acid copolymers, ethylene methyl hydrogen maleate copolymers, ethylene maleic acid copolymers, ethylene methyl hydrogen maleate/ethyl acrylate terpolymers, ethylene methacrylic acid/vinyl acetate terpolymers, ethylene/acrylic acid/vinyl acetate terpolymers, ethylene acrylic acid/vinyl alcohol terpolymers, ethylene/propylene/acrylic acid terpolymers, ethylene/styrene/acrylic acid terpolymers, ethylene/ acrylic acid/methyl methacrylate terpolymers, ethylene methacrylic acid/ ethyl acrylate terpolymers, ethylene/itaconic acid/methyl methacrylate terpolymers, ethylene methacrylic acid/acrylonitrile terpolymers, ethylene/ fumaric acid/vinyl methyl ether terpolymers, ethylene vinyl chloride/acrylic acid terpolymers, ethylene vinylidene chloride/acrylic acid terpolymers, ethylene/vinyl flouride/methacrylic acid terpolymers, and ethylene/chlorotrifluroethylene/methacrylic acid terpolymers.

The copolymer of an alpha-olefin having the formula $RCH=CH_2$ wherein R is H or $C_1$ to $C_{20}$ alkyl and an alpha,beta-ethylenically unsaturated carboxylic acid representatively may be produced by the free radical copolymerization of ethylene and a carboxylic acid comonomer therefor such as acrylic acid or methacrylic acid. Suitable such acid copolymers are the Primacor™ polymers, supplied by Dow Chemical Company, Midland, Michigan. Primacor is produced by the copolymerization of ethylene and acrylic acid. Ethylene-acrylic acid copolymers are herein referred to as EAA copolymer. A very suitable Primacor polymer is Primacor 1410 or Primacor 5981. Other suitable such acid copolymers are sold under the tradename Nucrel by du Pont; they are produced by the copolymerization of ethylene and methacrylic acid. Ethylene-methacrylic acid copolymers are herein referred to as EMAA copolymers. Ionomers are commercially available as Surlyn® from the E. I. du Pont de Nemours Company of Wilmington, Delaware, and are described in detail in US Patents 3,355,319 and 3,845,163.

The amine is a quaternary amine of the formula $[(R^1)(R^2)(R^3)(R^4)N]^+[X]^-$ wherein

$R^1$ is selected from H, aryl, or $C_1$ to $C_{50}$ alkyl optionally having one or more non-contiguous $C=O$ or $NHC=O$ or -S- or -O- in the carbon chain, or the same as $R^2$;

each of $R^2$, $R^3$, and $R^4$ is the same or different and selected from H, from $C_1$ to $C_{10}$ alkyl optionally substituted with one or more OH, or from $-(R^5-O)_a-H$ where a is an integer from 1 to 10 and $R^5$ is ethylene or propylene; and

X is an anion selected from chloride, bromide, iodide, fluoride, nitrate, fluoborate, phosphate, $C_1$ to $C_8$ alkyl phosphate, sulfate, $C_1$ to $C_8$ alkyl sulfate, formate, $C_1$ to $C_{20}$ alkyl or $C_6$ to $C_{24}$ alkaryl or aryl sulfonate, acetate, citrate, propionate, tartrate or carbonate. Preferably, the $C_1$ to $C_8$ alkyl phosphate is methyl phosphate or ethyl phosphate, the $C_1$ to $C_8$ alkyl sulfate is methyl sulfate or ethyl sulfate, and the $C_1$ to $C_8$ alkyl or $C_6$ to $C_{24}$ alkaryl or aryl sulfonate is methanesulfonate, butanesulfonate, benzenesulfonate, or $C_1$ to $C_{18}$ alkyl benzenesulfonate.

By "quaternary amine" as that term is employed herein, it is intended to include quaternary ammonium compounds and/or quaternary ammonium salts.

Suitable quaternary amines (QA) may be chosen from, but are not limited to, the methyl chloride salts of ethoxylated fatty amines. Commercial ones are available from the Tomah Division (Milton, Wisconsin) of Exxon Chemical and are represented by the formula:

$$\begin{array}{c} (CH_2CH_2O)_qH \\ | \\ Z-N-CH_3^{+} \qquad\qquad Cl^- \\ | \\ (CH_2CH_2O)_tH \end{array}$$

where Z is an alkyl or alkoxy radical, and q + t is the total number of moles of ethylene oxide in the chains. Examples of commercially available ones are as follows:

| COMMERCIAL QUATERNARY AMINES | | |
|---|---|---|
| QA Product Indentification Number | Z | q + t |
| Q-14-2 | $C_{10}OC_3$ | 2 |
| Q-14-5 | $C_{10}OC_3$ | 5 |
| Q-14-15 | $C_{10}OC_3$ | 15 |
| Q-17-2 | $C_{13}OC_3$ | 2 |
| Q-S-2 | Soya | 2 |
| Q-S-5 | Soya | 5 |
| Q-S-15 | Soya | 15 |
| Q-18-2 | $C_{18}$ | 2 |
| Q-18-5 | $C_{18}$ | 5 |
| Q-18-8 | $C_{18}$ | 8 |
| Q-18-10 | $C_{18}$ | 10 |
| Q-18-15 | $C_{18}$ | 15 |
| Q-T-2 | Tallow | 2 |
| Q-T-5 | Tallow | 5 |
| Q-T-15 | Tallow | 15 |
| Q-DT-3 | "Tallow Diamine" | 3 |

Other very suitable quaternary amines are the ethyl sulfate salts or methyl sulfate salts of alkoxylated fatty amines. Commercial ones are available under the trade-name Emerstat 6660 from Emery Industries and it is believed from applicants' own chemical analysis that they are represented by the formula: $(A)(A')N\text{-}[(CH_2CH_2O)_nH]_2^+ \; A'OSO_3^-$ where A is $C_8$ to $C_{20}$ alkyl, A' is ethyl and n is an integer from 1 to 4. Also suitable are methyl sulfate salts such as that sold under the trade-name Cyastat by Cyanamid; it has the formula $C_{11}H_{23}CONHC_3H_6N(CH_3)_3^+CH_3OSO_3^-$. Also suitable are ethosulfate salts such as that sold under the trade-name Larostat 264A Anhydrous, which is a modified soyadimethyl ethylammonium ethosulfate.

Additional QA's may be prepared by reacting a tertiary amine (TA) and an acid or alkylating agent, as further described in the Examples below.

The polymer containing carboxylic acid moieties and the quaternary amine are combined by mixing with heat. Optionally, a polymer compatible therewith, such as a polyolefin, may be blended in the mixture. Any suitable mixing means may be employed such as a blender or a twin screw extruder. The heat should be from about 50° C to 290° C, more preferably about 100° C to 250° C, even more preferably about 100° C to 200° C. Then the resultant may be formed into a film such as by heat pressing on a platen or by any of the various methods further discussed below. The film is permanently antistatic. It will dissipate an applied charge of ±5000 Vdc in less than about 3000 ms, more preferably less than 2000 ms, using the method described in Federal Test Method Standard 101c, Method 4046.1, even after a 24 hour water shower. This is unlike prior polymeric films containing an antistatic agent to give them antistatic characteristics, which characteristics can be washed out after a 24 hour water shower because the agents operate by migrating to the surface and attracting moisture. Furthermore, in some embodiments, the films survive 1 day, more preferably 3 days, even more preferably 5 days, and most preferably 12 days in a hot oven at approximately 70° C and still exhibit this static decay time of less than about 3000 ms, more preferably less than about 2000 ms.

Based on the % weight amount of polymer containing carboxylic acid moieties, it is preferred that the quaternary amine be present in a weight % amount up to about 50%, more preferably up to about 30%, even more preferably up to about 20%. Based on the total composition weight, which contains polyolefin, preferably the quaternary amine is present in a weight % amount of about 0.001% to about 30%, more preferably about 0.01% to about 20%, and even more preferably about 2% to about 10%.

The acid copolymer/quaternary amine is blended with polyolefin to make a film thereof Rf sealable. However, other polymer resins are suitable polymers for blending with the new, acid copolymer/quaternary amine too. Unless specifically set forth and defined or otherwise limited, the terms "polymer" or "polymer resin" as used herein generally include, but are not limited to, homopolymers, copolymers, such as, for example block, graft, random and alternating copolymers, terpolymers etc. and blends and modifications thereof. Furthermore, unless otherwise specifically limited the terms "polymer" or "polymer resin" shall

include all possible structures of the material. These structures include, but are not limited to, isotactic, syndiotactic and random symmetries.

The term "polyolef in" as used herein generally includes, but is not limited to, materials such as polyethylene (PE), polypropylene (PP), ethylene-vinyl acetate (EVA) and the like, the homopolymers, copolymers, terpolymers etc. thereof, and blends and modifications thereof. The term "polyolefin" shall include all possible structures thereof, which includes, but is not limited to, isotactic, syndiotactic and random symmetries.

According to Modern Plastics Encyclopedia, 1985-86, polyethylenes having densities ranging from about 0.900 g/cc to about 0.935 g/cc are called low density polyethylenes (LDPE), while those having densities from about 0.936 g/cc to about 0.940 g/cc are called medium density polyethylenes (MDPE), and those having densities from about 0.941 g/cc to about 0.965 g/cc and over are called high density polyethylenes (HDPE). The older, classic low density types of polyethylenes are usually polymer ized at high pressures and temperatures whereas, the older, classic high density types are usually polymerized at relatively low temperatures and pressures. The term "linear low density polyethylene" (LLDPE) as used herein, for a type of polyolefin, refers to the newer copolymers of a major amount of ethylene with a minor amount of one or more comonomers selected from $C_3$ to $C_{10}$ alpha olefins such as butene-1, pentene-1, hexene-1, 4-methyl-pentene-1, octene-1, etc. in which the molecules thereof comprise long chains with few side chains or branched structures achieved by low pressure polymerization. LLDPE has a density preferably in the range from about 0.911 g/cc to about 0.935 g/cc, and more preferably in the range of from about 0.912 g/cc to about 0.928 g/cc. Also, very low density linear low density polyethylenes (VLDPE) may be employed, and such have a density from about 0.910 g/cc to about 0.860 g/cc, or even lower.

The term "ethylene vinyl acetate copolymer" (EVA) as used herein, for a type of polyolefin refers to a copolymer formed from ethylene and vinyl acetate (VA) monomers. The ethylene derived units in the copolymer are present in major amounts by weight and the VA derived units in the copolymer are present in minor amounts by weight. For film making purposes, it is preferred that the VA content of the EVA be from about 3% to about 25%.

The term "polypropylene" (PP) as used herein for a type of polyolefin refers to polymers of propylene, and includes homopolymers, copolymers, such as for example block, graft, random, and alternating, copolymers, terpolymers etc. and blends and modifications thereof.

The term "ethylene alkyl-acrylate copolymer" (EA1Acr) as used herein refers to a copolymer formed from ethylene and alkyl acrylate wherein the alkyl moiety has 1 to 8 carbon atoms and the ethylene derived units in the copolymer are present in major amounts by weight and the alkyl-acrylate derived units in the copolymer are present in minor amounts by weight. Thus, the term "ethylene/methyl acrylate copolymer" (EMA) as used herein refers to a copolymer formed from ethylene and methyl acrylate monomers. The term "ethylene/ethyl acrylate copolymer" (EEA) as used herein refers to a copolymer formed from ethylene and ethyl acrylate monomers. The term "ethylene/butyl acrylate copolymer" (EBA) as used herein refers to a copolymer formed from ethylene and butyl acrylate monomers. Many suitable EBA's are commercially available and these have a butyl acrylate content from about 3% up to about 18% by weight. USI is a commercial supplier of Resin No. 4895, which is an EBA having about 3% by weight butyl acrylate and a melt index of about 3 and a melting point of about 106° to 110° C.

Blends of all families of polyolefins, such as blends of EVA, EA1Acr, PP, LDPE, HDPE, VLDPE, and LLDPE, may also be advantageously employed.

Measuring the anti static property: The antistatic property is exhibited by the ability of the polymer containing the agent to promote static charge decay, i.e. to dissipate a static charge. The polymer alone will not dissipate a static charge, but the polymer containing the agent is able to dissipate 99% of an applied static charge of ±5000 volts direct current (Vdc) in a short amount of time; i.e. less than 3 seconds, more preferably less than 2 seconds (2000 milliseconds). Federal Test Method Standard 101c, Method 4046.1, "Electrostatic Properties of Materials" states less than 2000 ms and thus it is preferred to have a material that complies with 101c. Decay meters for measuring the time for dissipation of the applied volts are commercially available, such as the 406C static decay meter supplied by Electrotech Systems, Inc. Unless otherwise indicated in the Examples below, the films, prior to testing, were equilibrated at less than about 15% relative humidity (RH) at about room temperature (RT) for about 24 hours or more.

Some of the films were tested for surface resistivity and volume resistivity according to ASTM D257. There is not necessarily a correlation between the surface or volume resistivity of a film and the ability of a film to decay or dissipate charges. Thus, the term "antistatic" as used herein describes a material which can dissipate 99% of an applied static charge of ±5000 Vdc in a short amount of time, preferably a static decay time less than about 3 seconds, more preferably less than about 2 seconds (Federal Test Method Standard 101c, Method 4046.1, "Electrostatic Properties of Materials"). If the material also happens to have

an antistatic resistivity, i.e. a surface resistivity of about $10^5$ to $10^{12}$ ohms/square as further described below, then that material will be described using the term "antistatic surface resistivity."

The Department of Defense and the Electronics Industry Association have standards on surface resistivity of a material in ohms/square as follows:

| Surface Resistivity Ranges (ohms/square) | | |
|---|---|---|
| Insulative | Antistatic or Static Dissipative | Conductive |
| greater than $10^{12}$ | $10^{12}$ to $10^5$ | less than $10^5$ |

It is noted that some of the films of the invention, as illustrated below, have both a preferred static decay time of about 3000 milliseconds or less and a static dissipative (as opposed to insulative) surface resistivity of $10^{12}$ to $10^5$ ohms/square, even after a 24-hour water shower or after 12 days in a hot oven. Thus these films are permanently antistatic by the definition of static decay time and permanently antistatic by the definition of antistatic surface resistivity; neither the 24-hour water shower nor the 12-day hot oven takes out the "antistatic" characteristic.

Manufacture of Films: Typically, in the manufacture of films, a suitable polymer usually in the form of pellets or the like, is brought into a heated area where the polymer feed is melted and heated to its extrusion temperature and extruded as a tubular "blown bubble" through an annular die. Other methods, such as "slot die" extrusion wherein the resultant extrudate is in planar, as opposed to tubular, form are also well known. If heat shrinkable film is desired, then after extrusion, the film is typically cooled and then reheated and stretched, i.e. oriented by "tenter framing" or by inflating with a "trapped bubble", to impart the heat-shrinkable property to the film, as is further described below. If desired, high energy irradiation, typically via an electron beam, preferably takes place prior to the stretching for orienting the film. However, for the present invention, such irradiation is not necessary since a very suitable packaging film having permanent antistatic characteristics is obtained without irradiation. Below, first is described the general process for making and orienting film. Then irradiation is described.

More particularly, manufacturing of films may be accomplished as follows. For instance, the manufacture of shrink films may be generally accomplished by extrusion (single layer films) or coextrusion (multilayer films) of thermoplastic resinous materials which have been heated to or above their flow or melting point from an extrusion or coextrusion die in, for example, either tubular or planar (sheet) form, followed by a post extrusion cooling. The stretching for orientation may be conducted at some point during the cool down and while the film is still hot and within its orientation temperature range followed by completing the cooling. Alternatively, after the post extrusion cooling, the relatively thick "tape" extrudate is then reheated to a temperature within its orientation temperature range and stretched to orient or align the crystallites and/or molecules of the material and then cooled. The orientation temperature range for a given material or materials will vary with the different resinous polymers and/or blends thereof which comprise the material. However, the orientation temperature range for a given thermoplastic material may generally be stated to be below the crystalline melting point of the material but above the second order transition temperature (sometimes referred to as the glass transition point) thereof. Within this temperature range, the material may be effectively oriented. The terms "orientation" or "oriented" are used herein to describe generally the process steps and resultant product characteristics obtained by stretching and immediately cooling a resinous thermoplastic polymeric material which has been heated to a temperature within its orientation temperature range so as to revise the intermolecular configuration of the material by physical alignment of the crystallites and/or molecules of the material to improve certain mechanical properties of the film such as, for example, shrink tension and orientation release stress. Both of these properties may be measured in accordance with ASTM D 2838-81. When the stretching force is applied in one direction monoaxial orientation results. When the stretching force is simultaneously applied in two directions biaxial orientation results. The term oriented is also herein used interchangeably with the term "heat-shrinkable" with these terms designating a material which has been stretched and set by cooling while substantially retaining its stretched dimensions. An oriented (i.e. heat-shrinkable) material will tend to return to its original unstretched (unextended) dimensions when heated to an appropriate elevated temperature.

An "oriented" or "heat-shrinkable" material is defined herein as a material which, when heated to an appropriate temperature above room temperature (for example 96° C), will have a free shrink of about 5% or greater in at least one linear direction.

Returning to the basic process for manufacturing the film as discussed above, it can be seen that the film, once extruded (or coextruded if it is a multi-layer film) and initially cooled, is then reheated to within its orientation temperature range and oriented by stretching. The stretching to orient may be accomplished in many ways such as, for example, by "trapped bubble" techniques or "tenter framing". These processes are well known to those in the art and refer to orientation procedures whereby the material is stretched in the cross or transverse direction (TD) and or in the longitudinal or machine direction (LD or MD). After being stretched, the film is quickly cooled while substantially retaining its stretched dimensions to cool the film rapidly and thus set or lock-in the oriented molecular configuration.

Of course, if a film having little or no orientation is desired, e.g. non-oriented or non-heat shrinkable film, the film may be formed from a non-orientable material or, if formed from an orientable material may be formed from a tube by using a "trapped bubble" technique commonly known as the "hot blown" technique. In forming a hot blown film, the tube is not cooled initially after extrusion or coextrusion but rather is first stretched by a hot blown bubble essentially immediately after extrusion while the tube is still at an elevated temperature above the orientation temperature range of the material. Thereafter, the film is cooled, by well-known methods. Those of skill in the art are well familiar with this process and the fact that the resulting film has substantially unoriented characteristics. Other methods for forming unoriented films are well known. Exemplary, is the method of cast extrusion or cast coextrusion which, likewise, is well known to those in the art.

Whichever film has been made (the non-oriented molecular configuration or the stretch-oriented "heat-shrinkable" molecular configuration), it may then be stored in rolls and utilized to package a wide variety of items. If the material was manufactured by "trapped bubble" techniques the material may still be in tubular form or it may have been slit and opened up to form a sheet of film material. In this regard, the product to be packaged may first be enclosed in the material by sealing the film to itself where necessary and appropriate to form a pouch or bag and then inserting the product therein. Alternatively, a sheet of the material may be utilized to overwrap the product. These packaging methods are all well known to those of skill in the art.

If the material is of the heat-shrinkable, i.e. "oriented", type, then after wrapping, the enclosed product may be subjected to elevated temperatures, for example, by passing the enclosed product through a hot air tunnel. This causes the enclosing heat shrinkable film to shrink around the product to produce a tight wrapping that closely conforms to the contour of the product. As stated above, the film sheet or tube may be formed into bags or pouches and thereafter utilized to package a product. In this case, if the film has been formed as a tube it may be preferable first to slit the tubular film to form a film sheet and thereafter form the sheet into bags or pouches. Such bag or pouch forming methods, likewise, are well known to those of skill in the art.

Alternative methods of producing films of this type are known to those in the art. One well-known alternative is the method of forming a multi-layer film by an extrusion coating rather than by an extrusion or coextrusion process as was discussed above. In extrusion coating a first tubular layer is extruded and thereafter an additional layer or layers is simultaneously or sequentially coated onto the outer surface of the first tubular layer or a successive layer.

The above general outline for manufacturing of films is not meant to be all inclusive since such processes are well known to those in the art. For example, see US Patent Nos. 4,274,900; 4,229,241; 4,194,039; 4,188,443; 4,048,428; 3,555,604; 3,741,253; 3,821,182 and 3,022,543. The disclosures of these patents are generally representative of such processes and are hereby incorporated by reference.

Other process variations for forming films are known to those in the art. For example, conventional pressing, thermoforming or laminating techniques (including corona laminating) may be employed. For instance, multiple layers may be first coextruded with additional layers thereafter being laminated thereon, or two multi-layer tubes may be coextruded with one of the tubes thereafter being laminated onto the other.

If a heat shrinkable, i.e. "oriented", film is desired, after extrusion and cooling, then after irradiation (or without irradiation), the tube may then be heated to soften it, and then the softened tube is passed through pinch rolls and stretch oriented by the trapped blown bubble technique discussed above.

Irradiation, if desired, may be accomplished by the use of high energy electrons, ultra violet radiation, X-rays, gamma rays, beta particles etc. Preferably, electrons are employed up to about 20 megarads (Mr) dosage level. (20 Mr. is 200 kilogrey.) The irradiation source can be any electron beam generator operating in a range of about 150 kilovolts to about 6 megavolts with a power output capable of supplying the desired dosage. The voltage can be adjusted to appropriate levels which may be for example 1,000,000 or 2,000,000 or 3,000,000 or 6,000,000 or higher or lower. Many apparatus for irradiating films are known to those of skill in the art. The irradiation is usually carried out at a dosage between about 1 Mr (10 kilogrey) and about 20 Mr (200 kilogrey), with a preferred dosage range of about 2 Mr (20 kilogrey) to about 12 Mr

(120 kilogrey). Irradiation can be carried out conveniently at room temperature, although higher and lower temperatures, for example, 0° C to 60° C may be employed.

It is also generally well known in the art that irradiation, such as by electron beam irradiation, of certain polymeric film materials generally results in a material having improved heat shrink properties, abuse resistance, structural integrity, tensile strength, puncture resistance, and/or delamination resistance. Such physical toughness improvements from irradiation, are discussed in US Patent 3,022,543 (1962) to Baird et al, US Patent 4,178,401 (1979) to Weinberg and US Patent 3,741,253 to Brax et al.

Advantageously, an outside polymeric layer of a film may include a small amount of about 10% by weight or less, more desirably about 7% by weight or less of an antiblock, to help alleviate any tackiness. A suitable antiblock is EPE 8160 supplied by Teknor Apex.

The following Examples are intended to illustrate the preferred embodiments of the invention and comparisons thereto. It is not intended to limit the invention thereby.

Unless indicated otherwise in the Examples, the testing for static decay time (SDT) was done after equilibration for 24 hours or more, at about room temperature (RT), at less than about 15% relative humidity (RH). Also it is noted that sometimes SDT testing was done to samples that had been subjected to abuse such as 1 to 12 days in a hot, about 160° F (71° C), oven or a 24-hour water shower. Where the oven is designated as "humid", a beaker of water had been kept in the oven with the film sample during testing to maintain a "humid" atmosphere; otherwise the oven was simply a "dry" or "ambient" oven, without any water beaker.

| MATERIALS EMPLOYED IN THE EXAMPLES | | | | |
|---|---|---|---|---|
| ANTIBLOCK | | | INGREDIENTS | SUPPLIER |
| EPE 8160 | | | Polyethylene Containing Micron Sized Silica | Teknor Apex |
| LLDPE | MI * | DENSITY | COMONOMER | SUPPLIER |
| DOWLEX 2045.03 | 1.1 | 0.920 | Octene | Dow Chemical |
| HDPE | MI | DENSITY | | SUPPLIER |
| Alathon 5777 | 6.3 | 0.950 | | du Pont |
| Petrothene LY 660-00 | 6.5 | 0.953 | | Quantum (formerly USI) |
| EVA | MI | % VA | COMONOMER | SUPPLIER |
| LD318.92 | 2.0 | 9 | Vinyl Acetate | Exxon |
| EAA | MI | % BY WEIGHT ACRYLIC ACID | % BY WEIGHT ETHYLENE | SUPPLIER |
| PRIMACOR 1410 | 1.5 | 9 | 91 | Dow Chemical |
| PRIMACOR 5981 | 300 | 20 | 80 | Dow Chemical |
| QA | FORMULA | | | SUPPLIER |
| Emerstat 6660 | $[H(CH_2)_{8-20}](C_2H_5)N[(C_2H_4O)_{1-4}H]_2^+ \; C_2H_5OSO_3^-$ | | | Emery Industries |
| Larostat 264A Anhydrous | Modified soyadimethyl ethylammonium ethosulfate, which is $[H(CH_2)_{14-20}](C_2H_5)N(CH_3)_2^+ \; C_2H_5OSO_3^-$ | | | Jordan/PPG/Mazer |

* MI is an abbreviation for melt index.

EXAMPLE I (Master Batches)

First, five master batches, herein designated as MB1, MB2, MB3, MB4 and MB5 were made, each containing a certain QA. For MB1, 66 2/3% by wt. EVA (LD318.92) was mixed with 33 1/3% by wt. EAA (Primacor 5981), and then 80% by wt. of the resultant mix was blended with heating with 20% by wt. QA (Emerstat 6660). For MB2, 81% by wt. EAA (Primacor 1410) was blended with heating with 19% by wt. QA (Larostat 264A). For MB3, 80% by wt. EMAA (Nucrel 1207) was blended with heating with 20% by wt. QA (Larostat 264A). For MB4, 75% by wt. EAA (Primacor 1410) was blended with heating with 25% by wt. QA (Larostat 264A). For MB5, 60 parts by wt. EVA (LD318.92) were mixed with 30 parts by weight EAA (Primacor 5981), and then the resultant mix was blended with heating with 15 parts by wt. Emerstat 6660. In summary, the compositions of the MBs were as follows:

MB1: 80% (66 2/3% EVA + 33 1/3% EAA Primacor 5981)
20% QA Emerstat 6660
MB2: 81% EAA Primacor 1410
19% QA Larostat 264A
MB3: 80% EMAA Nucrel 1207
20% QA Larostat 264A
MB4: 75% EAA Primacor 1410
25% QA Larostat 264A
MB5: 60 parts EVA
30 parts EAA Primacor 5981
15 parts QA Emerstat 6660

EXAMPLE II

MB5 was mixed with EVA (LB 318.92) or LLDPE (Dowlex 2045.03), and coextruded into a hot blown tubular film having 5 layers. The film was of the structure, where amounts are given in % by wt. or parts by wt.:

LAYER 1: 90% EVA + 10% Antiblock
LAYER 2: 66 2/3 pts EVA + 33 1/3 pts MB5
LAYER 3: 90% LLDPE + 10% MB5
LAYER 4: 66 2/3 pts EVA + 33 1/3 pts MB5
LAYER 5: 90% EVA + 10% Antiblock The following electrical measurements were taken on samples of film:

| | |
|---|---|
| AS IS: | 225 ms SDT |
| AFTER 24 HR WATER SHOWER: | 317 ms SDT |
| AFTER 12 DAY HOT DRY OVEN: | 659 ms SDT |
| AS IS: | $>10^{16}$ ohms/sq surface resistivity |
| AFTER 24 HR WATER SHOWER: | $>10^{16}$ ohms/sq surface resistivity |
| AFTER 12 DAY HOT DRY OVEN: | $>10^{16}$ ohms/sq surface resistivity |

Next the film was made into a document holder by Rf sealing on 3 edges, two sheets of film of about 11 1/4 inches (28.5 cm) X 9 inches (23 cm), leaving the fourth side open so that documents could be slid into the holder. The Rf sealing equipment used was manufactured by Farathon. The dwell time was 3.4 seconds. The pressure was 95 pounds per square inch (6.55 bar). The plate temperature was 135°F (57°C). The frequency was 27.12 MHz.

EXAMPLE III

Example II was repeated, except this time MB1 and M82 were mixed with EVA and LLDPE in the

following amounts:

LAYER 1: 60% EVA + 30% MB2 + 10% ANTIBLOCK

LAYER 2: 66 2 3 parts EVA + 33 1 3 parts MB1

LAYER 3: 90% LLDPE + 10% MB1

LAYER 4: 66 2 3 parts EVA + 33 1 3 parts MB1

LAYER 5: 60% EVA + 30% MB2 + 10% ANTIBLOCK The following electrical measurements were taken on samples of film:

| | |
|---|---|
| AS IS: | 105 ms SDT |
| AFTER 24 HR WATER SHOWER: | 122 ms SDT |
| AFTER 12 DAY HOT DRY OVEN: | 68 ms SDT |
| AS IS: | 4.7 x $10^{10}$ ohms/sq surface resistivity |
| AFTER 24 HR WATER SHOWER: | 4.5 X $10^{10}$ ohms/sq surface resistivity |
| AFTER 12 DAY HOT DRY OVEN: | 1.1 X $10^{10}$ ohms/sq surface resistivity |

Next, two sheets of the film were made into a document holder by Rf sealing on 3 edges as in Example II.

## EXAMPLE IV

Example II was repeated, except this time MB3 was mixed with EVA and LLDPE in the following amounts:

LAYER 1: 60% EVA + 30% MB3 + 10% ANTIBLOCK

LAYER 2: 66 2 3 parts EVA + 33 1 3 parts MB3

LAYER 3: 90% LLDPE + 10% MB3

LAYER 4: 66 2 3 parts EVA + 33 1 3 parts MB3

LAYER 5: 60% EVA + 30% MB3 + 10% ANTIBLOCK The following electrical measurements were taken on samples of film:

| | |
|---|---|
| AS IS: | 27 ms SDT |
| AFTER 24 HR WATER SHOWER: | 118 ms SDT |
| AFTER 12 DAY HOT DRY OVEN: | 46 ms SDT |
| AS IS: | 1.9 x $10^{10}$ ohms/sq surface resistivity |
| AFTER 24 HR WATER SHOWER: | 1.7 x $10^{10}$ ohms/sq surface resistivity |
| AFTER 12 DAYS HOT DRY OVEN: | 3.2 X $10^{10}$ ohms/sq surface resistivity |

Next, it was attempted to make two sheets of the film into a document holder by Rf sealing on 3 edges as in Example II, but the film would not Rf seal. Difficulty was also encountered in attempts to seal samples of this film with conventional heat sealing. It is believed the reason was contamination of the seal fusion area.

## EXAMPLE V

Example II was repeated except this time MB4 was mixed with EVA and LLDPE, and the surface layers were HDPE (Alathon 5777) as follows:

LAYER 1: 100% HDPE

LAYER 2: 66 2/3 parts EVA + 33 1/3 parts MB4

LAYER 3: 90% LLDPE + 10% MB4

LAYER 4: 66 2/3 parts EVA + 33 1/3 parts MB4

LAYER 5: 100% HDPE The following electrical measurements were taken on samples of the film:

| | |
|---|---|
| AS IS: | 309 ms SDT |
| AS IS:<br>AFTER 12 DAY HOT DRY OVEN: | $1X10^{13}$ ohms sq surface resistivity<br>$>10^{16}$ ohms sq surface resistivity |

Next, two sheets of the film were made into a document holder by Rf sealing on 3 edges as in Example II.

## EXAMPLE VI

Example II was repeated except this time MB4 was mixed with EVA and LLDPE, and the surface layers were HDPE (Petrothene LY 660-00) as follows:

LAYER 1: 100% HDPE
LAYER 2: 66 2/3 parts EVA + 33 1/3 parts MB4
LAYER 3: 90% LLDPE + 10% MB4
LAYER 4: 66 2/3 parts EVA + 33 1/3 parts MB4
LAYER 5: 100% HDPE The following electrical measurements were taken on samples of film:

| | |
|---|---|
| AS IS: | 393 ms SDT |
| AFTER 24 HR WATER SHOWER: | 217 ms SDT |
| AFTER 12 DAY HOT DRY OVEN: | 227 ms SDT |
| AS IS: | $5X10^{13}$ ohms sq surface resistivity |
| AFTER 24 HR WATER SHOWER: | $4.7X10^{13}$ ohms sq surface resistivity |
| AFTER 12 DAY HOT DRY OVEN: | $8.4X10^{13}$ ohms sq surface resistivity |

From the foregoing description, one skilled in the art can easily ascertain the essential characteristics of this invention, and without departing from the spirit and scope thereof, can make various changes and modifications of the invention to adapt it to various usages and conditions.

## Claims

1. A method for making radio frequency sealable film comprising

(1) mixing with heat (A) a polymer containing carboxylic acid moieties and (B) an antistatically effective amount of a quaternary amine wherein:

(A) the polymer containing carboxylic acid moieties is
a copolymer of (i) a major amount by mol % of an alpha-olefin of the formula $RCH=CH_2$ wherein R is H or $C_1$ to $C_{20}$ alkyl, and (ii) a minor amount by mol % of an alpha,beta-ethylenically unsaturated carboxylic acid,
and

(B) the quaternary amine is of the formula
$[(R^1)(R^2)(R^3)(R^4)N]^+ [X]^-$
$R^1$ is selected from H, aryl, or $C_1$ to $C_{50}$ alkyl optionally having one or more non-contiguous C=O or NHC=O or -S- or -O- in the carbon chain, or the same as $R^2$;
each of $R^2$, $R^3$, and $R^4$ is the same or different and selected from K, from $C_1$ to $C_{18}$ alkyl optionally substituted with one or more OH, or from $-(R^5-O)_a-H$ where a is an integer from 1 to 10 and $R^5$ is ethylene or propylene;
and
X is an anion selected from chloride, bromide, iodide, fluoride, nitrate, fluoborate, phosphate, sulfate, $C_1$ to $C_8$ alkyl sulfate, formate, $C_1$ to $C_{20}$ alkyl or $C_6$ to $C_{24}$ alkaryl or aryl sulfonate, acetate, citrate, trifluoroacetate, propionate, tartrate or carbonate;

(2) mixing the acid copolymer/quaternary amine mixture with polyolefin;
and

(3) forming the resultant into a film.

2. The method of claim 1, wherein the heat in step (1) is at a temperature of about 50 °C to about 290 °C.

3. The method of claim 1 further including irradiating at least one layer of the film.

4. The method of claim 1 further including orienting the film.

5. A radio frequency sealable film comprising (A) a polymer containing carboxylic acid moieties and (B) an antistatically effective amount of a quaternary amine and (C) polyolef in wherein:

(A) the polymer containing carboxylic acid moieties is a copolymer of (i) a major amount by mol % of an alpha-olefin of the formula $RCH=CH_2$ wherein A is H or $C_1$ to $C_{20}$ alkyl, and (ii) a minor amount by mol % of an alpha,beta-ethylenically unsaturated carboxylic acid;

and

(B) the quaternary amine is of the formula

$[(R^1)(R^2)(R^3)(R^4)N]^+ [X]^-$

wherein

$R^1$ is selected from H, aryl, or $C_1$ to $C_{50}$ alkyl optionally having one or more non-contiguous C=O or NHC=O or -S- or -O- in the carbon chain, or the same as $R^2$;

each of $R^2$, $R^3$, and $R^4$ is the same or different and selected from H, from $C_1$ to $C_{18}$ alkyl optionally substituted with one or more OH, or from $-(R^5-O)_a-H$ where a is an integer from 1 to 10 and $R^5$ is ethylene or propylene:

and:

X is an anion selected from chloride, bromide, iodide, fluoride, nitrate, fluoborate, phosphate, $C_1$ to $C_8$ alkyl phosphate, sulfate, $C_1$ to $C_8$ alkyl sulfate, formate, $C_1$ to $C_{20}$ alkyl or $C_8$ to $C_{24}$ alkaryl or aryl sulfonate, acetate, citrate, trifluoroacetate, propionate, tartrate, or carbonate.

6. The film of claim 5, wherein the polymer containing carboxylic acid moieties is ethylene-acrylic acid or ethylene-methacrylic acid and the amine is of the formula wherein: $R^1$ is $C_8$ to $C_{20}$ alkyl, $C_{10}OC_3$, $C_{13}OC_3$, soya or tallow; $R^2$ and $R^3$ are both $CH_3$ or $C_2H_4OH$, $R^4$ is methyl or ethyl, and X is chloride, alkyl sulfonate, methyl sulfate or ethyl sulfate.

7. The film of claim 5 wherein said film is oriented.

8. The film of claim 5 wherein at least one film layer has been irradiated at a dosage up to about 20 Mr (200 kilogrey).

9. A permanently antistatic radio frequency sealable film comprising a film comprising (A) ethylene-acrylic acid or ethylene-methacrylic acid and (B) a quaternary amine of the formula $[(R^1)(R^2)(R^3)(R^4)N]^+ [X]^-$ where $R^1$ is a $C_4$ to $C_{30}$ straight or branched alkyl optionally including one or more ether linkages, each of $R^2$ and $R^3$ and $R^4$ is the same or different and selected from methyl or ethyl or $-(R^5-O)_a-H$ where a is an interger from 1 to 10, and X is chloride, alkyl sulfonate, methyl sulfate, or ethyl sulfate, sand (C) polyolefin.

10. A film comprising one or more layers made of the acid copolymer.quaternary amine of claim 9 which film is permanently antistatic and will, after a 24 hour water shower dissipate an applied charge of ±5000 Vdc in less than about 3000 ms without the film having been subjected to irradiation from an electron beam.

11. A film comprising a 5-layer, permanently antistatic radio frequency sealable film having the layers in direct surface-to-surface contact with each other in the following order:

(1) a first layer, said layer being an outside layer comprising about 50% or more by weight of ethylene vinyl acetate copolymer and about 10% or less by weight or antiblock;

(2) a second layer, said layer being an interior layer comprising about 65% or more by weight ethylene vinyl acetate copolymer, and about 35% or less by weight of a mixture of (A) a polymer containing carboxylic acid moieties and (B) an antistatically effective amount of a quaternary amine wherein:

(A) the polymer containing carboxylic acid moieties is a copolymer of (i) a major amount by mol % of an alpha-olefin of the formula $RCH=CH_2$ wherein R is H or $C_1$ to $C_{20}$ alkyl, and (ii) is a minor amount by mol % of an alpha-beta-ethylenically unsaturated carboxylic acid;

and

(B) the quaternary amine is of the formula

$[(R^1)(R^2)(R^3)(R^4)N]^+ [X]^-$

wherein

$R^1$ is selected from H, aryl, or $C_1$ to $C_{50}$ alkyl optionally having one or more non-contiguous C=O or NHC=O or -S- or -O- in the carbon chain, or the same as $R^2$;

each of $R^2$, $R^3$, and $R^4$ is the same or different and selected from H, from $C_1$ to $C_{18}$ alkyl optionally substituted with one or more OH, or from $-(R^5-O)_a-H$ where a is an integer from 1 to 10 and $R^5$ is ethylene or propylene;

and

X is an an ion selected from chloride, bromide, iodide, fluoride, nitrate, fluoborate, phosphate, $C_1$ to $C_8$ alkyl phosphate, sulfate, $C_1$ to $C_8$ alkyl sulfate, formate, $C_1$ to $C_{20}$ alkyl or $C_6$ to $C_{24}$ alkaryl or aryl sulfonate, acetate, citrate, trifluoroacetate, propionate, tartrate, or carbonate;

(3) a third layer, said layer being a core layer comprising about 65% or more by weight of a polyolefin selected from linear low density polyethylene copolymer, ethylene vinyl acetate copolymer, or mixtures thereof, and about 35% or less by weight of a mixture of (A) a polymer containing carboxylic acid moieties and (B) an antistatically effective amount of a quaternary amine

wherein

(A) the polymer containing carboxylic acid moieties is a copolymer of (i) a major amount by mol % of an alpha-olefin of the formula $RCH=CH_2$, wherein R is H or $C_1$ to $C_{20}$ alkyl, and (ii) a minor amount by mol % of an alpha,beta-ethylenically unsaturated carboxylic acid,

and

(B) the quaternary amine is of the formula

$[(R^1)(R^2)(R^3)(R^4)N]^+ [X]^-$

wherein

$R^1$ is selected from K, aryl, or $C_1$ to $C_{50}$ alkyl optionally having one or more non-contiguous C=O or NHC=O or -S- or -O- in the carbon chain, or the same as $R^2$;

each of $R^2$, $R^3$, and $R^4$ is the same or different and selected from H, from $C_1$ to $C_{18}$ alkyl optionally substituted with one or more OH, or from $-(R^5-O)_a-H$ where a is an integer from 1 to 10 and $R^5$ is ethylene or propylene;

and

X is an an ion selected from chloride, bromide, iodide, fluoride, nitrate, fluoborate, phosphate, $C_1$ to $C_8$ alkyl phosphate, sulfate, $C_1$ to $C_8$ alkyl sulfate, fornate, $C_1$ to $C_{20}$ alkyl or $C_6$ to $C_{24}$ alkaryl or aryl sulfonate, acetate, citrate, trifluoroacetate, propionate, tartrate, or carbonate,

(4) a fourth layer, comprising an interior layer the same as layer (2), and

(5) a fifth layer, comprising an outside layer the same as layer (1).

12. A radio frequency sealable film comprising (A) a polymer containing carboxylic acid moieties and (B) an antistatically effective amount of a quaternary amine and (C) polyolefin wherein:

(A) the polymer containing carboxylic acid moieties is

a copolymer of (i) a major amount by mol % of an alpha-olefin of the formula $RCH=CH_2$ wherein R is H or $C_1$ to $C_{20}$ alkyl, and (ii) a minor amount by mol % of an alpha,beta-ethylenically unsaturated carboxylic acid,

and

(B) the quaternary amine is of the formula

$[(R^1)(R^2)(R^3)(R^4)N]^+ [X]^-$

wherein

$R^1$ is selected from H, aryl, or $C_1$ to $C_{50}$ alkyl optionally having one or more non-contiguous C=O or NHC=O or -S- or -O- in the carbon chain, or the same as $R^2$;

each of $R^2$, $R^3$, and $R^4$ is the same or different and selected from H, from $C_1$ to $C_{18}$ alkyl optionally substituted with one or more OH, or from $-(R^5-O)_a-H$ where a is an integer from 1 to 10 and $R^5$ is ethylene or propylene;

and

X is an an ion selected from chloride, bromide, iodide, fluoride, nitrate, fluoborate, phosphate, $C_1$ to $C_8$ alkyl phosphate, sulfate, $C_1$ to $C_8$ alkyl sulfate, formate, $C_1$ to $C_{20}$ alkyl or $C_6$ to $C_{24}$ alkaryl or aryl sulfonate, acetate, citrate, trifluoroacetate, propionate, tartrate, or carbonate,

which film is antistatic and will dissipate an applied charge of ±5000 Vdc in a static decay time less than about 3000 milliseconds and will have a surface resistivity from about $10^5$ to about $10^{12}$ ohms/square.

13. The film of claim 12, which will have the static decay time less than about 3000 milliseconds and the surface resistivity from about $10^5$ to about $10^{12}$ ohms/square, after a 24 hour water shower.

14. The film of claim 12, which will have the static decay time less than about 3000 milliseconds and the surface resistivity from about $10^5$ to about $10^{12}$ ohms/square, after 12 days in a hot oven of about 70° C.